# EUROPEAN PATENT SPECIFICATION

(11) **EP 1 325 799 B1**
(45) Date of publication and mention of the grant of the patent: **08.11.2006**
(21) Application number: 02027125.0
(22) Date of filing: 04.12.2002
(51) Int. Cl.: B27M 3/34, B29C 45/14, B27M 3/36, B65D 5/42

(54) **Method to make containers, such as boxes, fruit crates, containers for furniture or personal use or otherwise, and containers thus made**
Verfahren zum Herstellen von Behältern wie Kisten, Behältern für Obst, Behältern für Möbeln, oder des persönlichen Bedarfs oder anderes und so hergestellte Behälter
Méthode de fabrication de conteneurs, par exemple des boîtes, cageots pour fruits, caisses pour meubles, usage personnel ou autre et récipients ainsi obtenues

(30) Priority: 05.12.2001 IT UD20010202
(43) Date of publication of application: 09.07.2003
(73) Proprietor: FANTONI SpA, 33010 OSOPPO (UD) (IT)
(72) Inventor: Fantoni, Giovanni, 33013 Gemona Del Friuli (IT); Zancai, Lucio, 33084 Cordenons (IT)
(74) Representative: Petraz, Gilberto Luigi

(56) References cited:
- EP-A- 0 759 839
- DE-U- 8 127 771
- US-A- 3 571 857
- US-B1- 6 286 198

## Description

### FIELD OF THE INVENTION

The invention concerns a method to make containers such as boxes, fruit crates, containers for furniture or for personal use or otherwise, according to the preamble of claim 1 and containers according to the preamble of claim 20. An example of such a method and container is disclosed by DE-U-81 27 771.

### BACKGROUND OF THE INVENTION

The state of the art includes various techniques to make containers, using cardboard, wood or metal.

One known technique, disclosed in DE-U-81 27 771, provides to make both the bottom wall and the lateral walls by shearing from a single base panel made of wood fibre. The base panel is first glued to an additional sheet of paper or plastic material which is not sheared. Hinge zones are created in this way, consisting of the additional sheet and which allows to bend the different parts and to glue them or fix them together.

Another known technique is to mill the lateral edges of the individual elements which make up the walls of the container with shaped mills, to create on the adjacent edges a first V-shaped groove, as deep as more than half the thickness of the elements and, in the remaining part of the thickness, a second, upside-down V-shaped groove. In this way substantially X-shaped grooves are formed which facilitate the coupling of the various walls at 90°.

However, both these known techniques provide many working stages and/or the use of particular tools, which make the production process complex and costly.

The US-A-6,286,198 discloses a method to form structure by folding a panel along one or more V-grooves cut in the inside surface of the panel. The verticies formed by the V-groove on the folded panel includes film hinges which are formed by injecting a plastic material in a groove formed on the outside surface of the panel. The plastic material simply fills the grooves and grips the recessed region of the panel.

The present Applicant has devised the method to make containers according to the invention to overcome the shortcomings of the state of the art.

### SUMMARY OF THE INVENTION

The invention is set forth in independent method claim 1 and independent product claim 20, while the dependent claims describe other innovative characteristics of the invention.

One purpose of the invention is to perfect a method which allows to make containers such as boxes, fruit crates, containers for furniture or for personal use or otherwise, in a simple fashion and at very limited cost.

The method according to the invention provides that, to make a particular container, a substantially plane panel is used, for example made of wood fibre or composite material, such as that commonly known as MDF. The panel is advantageously several millimetres thick, for example from 2 to 10, and has a surface extension at least equal to the sum of the surface of the bottom wall and the surfaces of the lateral walls.

The method according to the invention comprises a first shearing step, in order to make first notches, advantageously through, which delimit what will be the lateral walls from what will be the bottom wall. The width of the notches is substantially constant, and advantageously is greater than the thickness of the plane panel, for example from 5 to 15 mm.

According to a variant, the first notches have an area of discontinuity in particular zones of the panel, in order to keep the different parts which will make up the container joined together by zones of temporary union.

Subsequently the method provides a second working step, or injection step, during which plastic material is injected into the previously made notches, advantageously at high pressure (from about 200 to about 800 bar) and at high temperature (from about 140°C to about 260°C); as it inserts itself between the wood fibres, the plastic material defines a connection layer between the adjacent edges of the parts of the panel, which acts as a joining element between two adjacent parts.

In order to perform this injection, it is advantageous to use a punch which has a V-shaped end, so as to define a corresponding V-shaped groove in each connection layer.

The depth of the V-shaped groove is advantageously less than the thickness of the panel but greater than half thereof, so that a zone of permanent join is also made between the two adjacent edges.

In the event that, during the first shearing step, the zones of temporary join are left in the panel, between the different parts which will make up the container, a second shearing step is provided to make second notches in said zones of temporary join.

Both the first and the possible second shearing step can be made, for example, with a shearing press or a pressure shear, with an alternating movement along an axis perpendicular to that on which the plane panel lies.

At the end of the aforesaid working steps, the plane panel will be shaped, sheared and provided with the join elements. The latter, made of plastic material, arranged between the walls of the container cut out from the panel, constitute proper hinges which allow each part to be inclined up to 90° and more with respect to the adjacent one, while still remaining joined thereto.

The method according to the invention also allows to achieve, advantageously and simultaneously with the other elements, two fins at the sides of two first opposite lateral walls, for example on the shortest walls, in the case of a container with a rectangular bottom wall. Once folded towards the inside of the container and arranged parallel with the other two lateral walls, the fins are joined to the latter so as to form in this way the four walls of the container. The join between the fins of the first two lateral walls and the other two lateral walls can be performed with any conventional means, such as for example by gluing or by attachment elements, commonly known as fasteners.

Any type of container and the relative cover can be made with the method according to the invention.

The method according to the invention has the considerable advantage that it essentially requires only two working steps (shearing and injection) to transform the plane panel into a combination of elements, sheared to size and hinged together, which by means of a further, simple operation of attaching the lateral walls, with or without fins, can be made into any container whatsoever.

Furthermore, while the above-mentioned working steps are advantageously performed in an equipped site, the step to attach the lateral walls, and hence the final composition of the container, can be easily performed by the user when needed, thus greatly saving space and storage and transport costs.

Moreover, should it be desired to make a fruit crate, during the second shearing step it is also possible to advantageously make two upper fins which, during use, can be inserted into corresponding eyelets made in the bottom wall of a similar container, in order to facilitate the piling of crates one on top of the other.

### BRIEF DESCRIPTION OF THE DRAWINGS

These and other characteristics of the invention will be apparent from the following description of a preferential form of embodiment, given as a non-restrictive example with reference to the attached drawings wherein:
- Fig. 1: is a plane view of a plane panel to make a container using the method according to the invention, shown after a first working step;
- Fig. 2: is a plane view of the plane panel in Fig. 1, shown after a second working step;
- Fig. 3: is a plane view of the plane panel in Fig. 1, shown after a possible third working step;
- Figs. 4a, 4b, 4c and 4d: are side views, enlarged and partly in section, of a machine with which the second working step of the plane panel in Fig. 1 is performed;
- Fig. 5: is a prospective view of a fruit crate made with the method according to the invention;

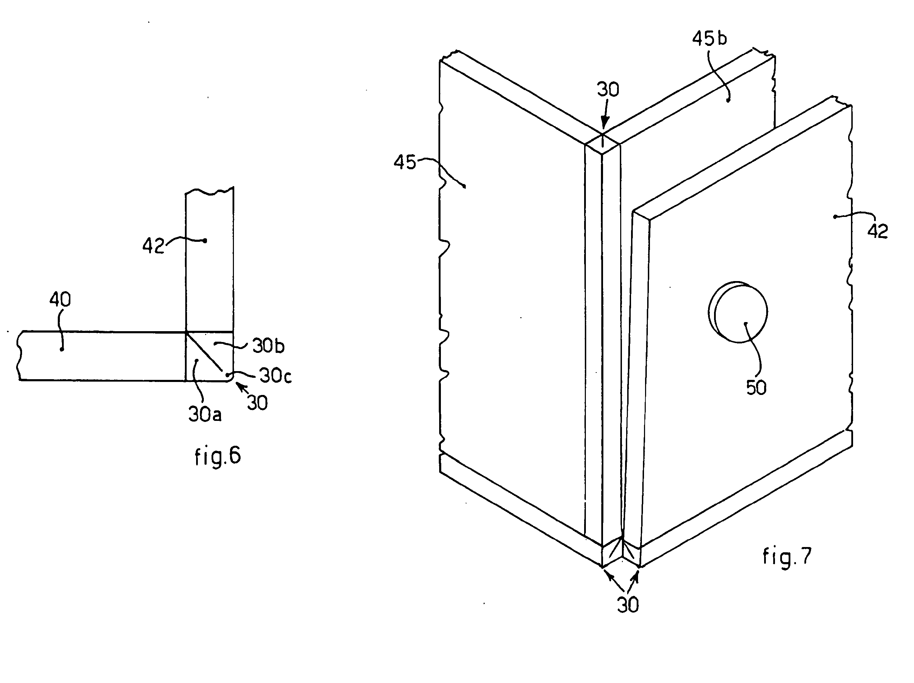

- Fig. 6: is a first enlarged detail of Fig. 5;
- Fig. 7: is a second enlarged detail of Fig. 5.

### DETAILED DESCRIPTION OF A PREFERENTIAL EMBODIMENT

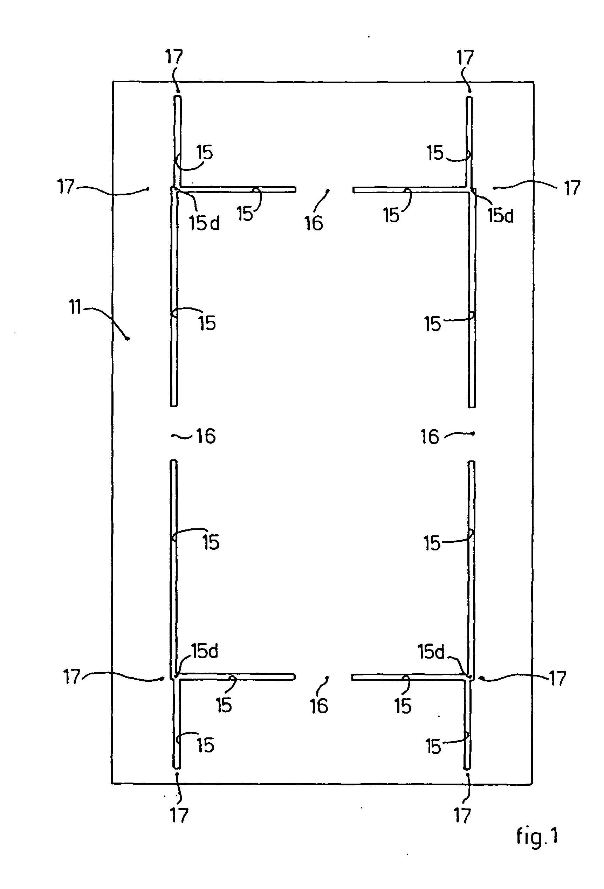

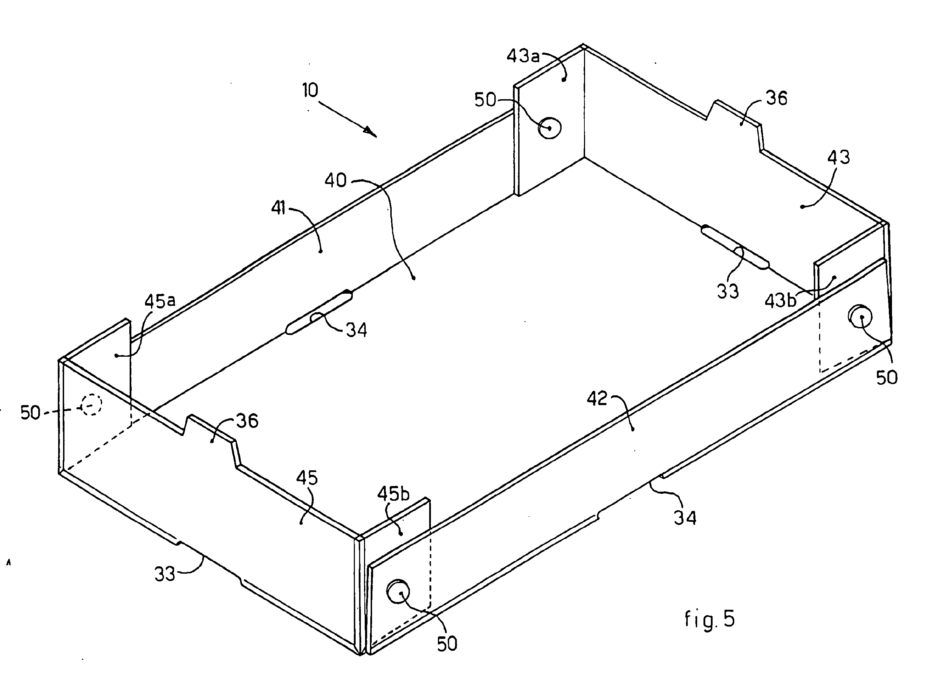

With reference to Figs. 1 and 5, the method according to the invention to make a container 10 , which in this case is a fruit crate, or any other type of container, provides to use a plane panel 11 made of wood fibre or other composite material, such as MDF.

The size of the panel 11, to make a crate 10 with a standardized base, that is, 290 x 490 mm, are as follows: width 410 mm, length 706 mm, thickness about 3-4 mm, in this case 3.2 mm.

In a first working step, consisting of shearing, a plurality of through notches or slits 15 are made in the panel 11, with a constant width of about 5-6 mm, for example 5.5 mm.

To facilitate the subsequent working step, it is useful, though not essential for the purposes of the invention, that the notches 15 do not cause any part of the panel 11 to be completely detached. For this purpose, for example, the median zones 16, arranged between pairs of adjacent notches 15, and the peripheral zones 17, arranged between the notches 15 and the outside of the panel 11, are kept without notches.

The shearing operation can be performed with any conventional shearing machine.

In a second working step, or injection step, plastic material such as nylon, polypropylene, polyolefine or otherwise is injected into all the notches 15, to define inside each notch 15 a connection layer 30 between the different adjacent parts of the panel 11, which will later serve to form the container 10, as will be explained in detail later.

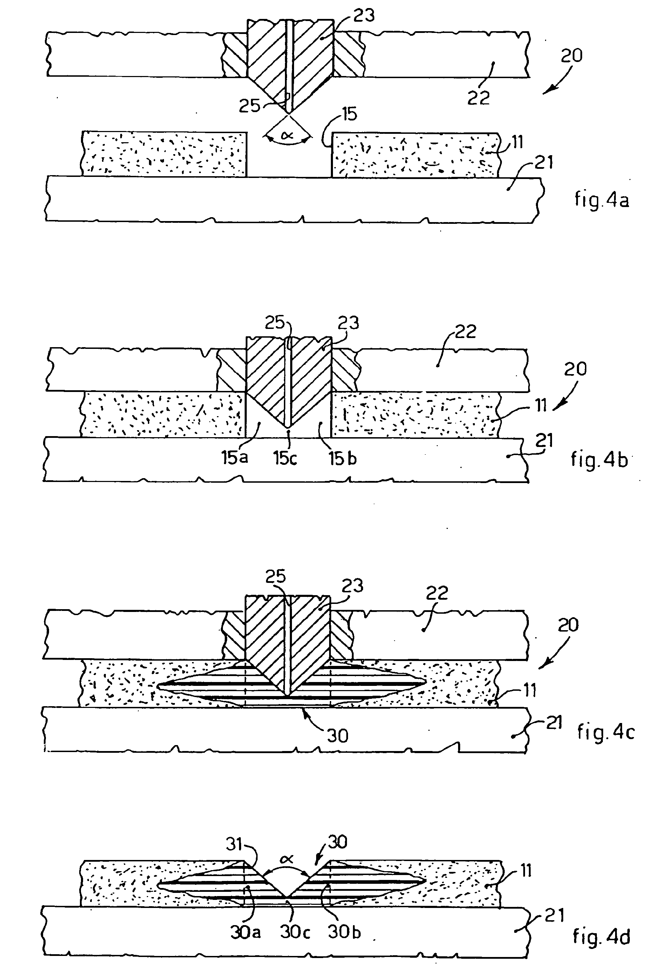

The injection step is made by means of an injection press 20 (Figs. 4a to 4d), which comprises a base 21 on which the panel 11 is rested, and a mold 22 able to be arranged above the panel 11 and to impart thereon a very strong force, for example about 1.500.000 N.

The pressure with which the mold 22 holds the panel 11 pressed against the base 20 prevents the panel from deforming during the injection step. Moreover, if, during the first shearing step, the notches 15 have been made without any break in continuity, from one edge of the panel 11 to the other, the pressure of the mold 22 also prevents the different parts of the panel 11 from moving from their original position, which is an essential condition for a correct injection step.

The mold 22 is provided with one or more punches 23, each having the lower end pointed, V-shaped, and provided with one or more vertical injection channels 25, through which the plastic material is able to be injected under pressure. The angle at the top α (Fig. 4a) of the point of each punch 23 is advantageously equal to or a little more than 90°, for example 95°.

When the mold 22 is in the lowered position (Fig. 4b), each punch 23 is inserted into the corresponding notch 15 and divides it substantially into two parts, 15a and 15b, connected together in the intermediate zone 15c.

The plastic material is then injected at high pressure and high temperature, for example about 200-800 bar and about 140°-260°C, through the channels 25 into the notches 15. With such pressure and temperature, the plastic material not only fills the zones 15a, 15b and 15c of the notches 15, but is also inserted into the adjacent parts of the panel 11 (Fig. 4c).

To distribute the plastic material better into the notches 15 and into the adjacent parts of the panel 11, the same plastic material is injected advantageously into the points 15d where three notches 15 meet (Fig. 1).

Once the mold 22 has been removed (Fig. 4d), the connecting layer 30 made of plastic material remains both in each notch 15, with a V-shaped upper groove 31, an angle at the top α equal to that of the punch 23 and into the adjacent parts of the panel 11, because the connecting layer 30 comprises also two lateral parts 30a and 30b, permanently inserted into the panel 11, and a join zone 30c with a thickness of about 1 mm. The join zones 30c constitute proper hinges between adjacent parts of the panel 11.

Once the plastic material of the layers 30 has cooled and set, a third possible working step is performed, which consists of another shearing, only in the case that, during the first shearing step, the median zones 16 and the peripheral zones 17 have been left without notches 15.

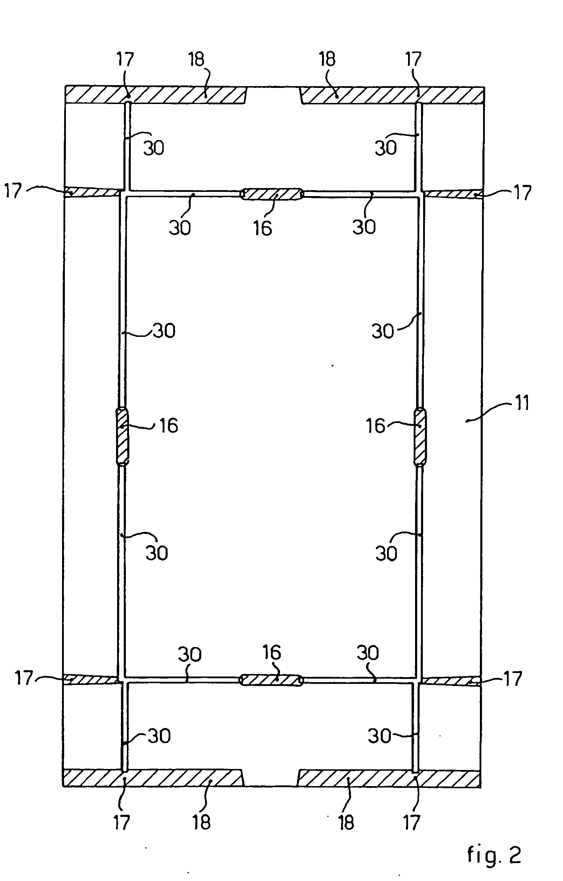

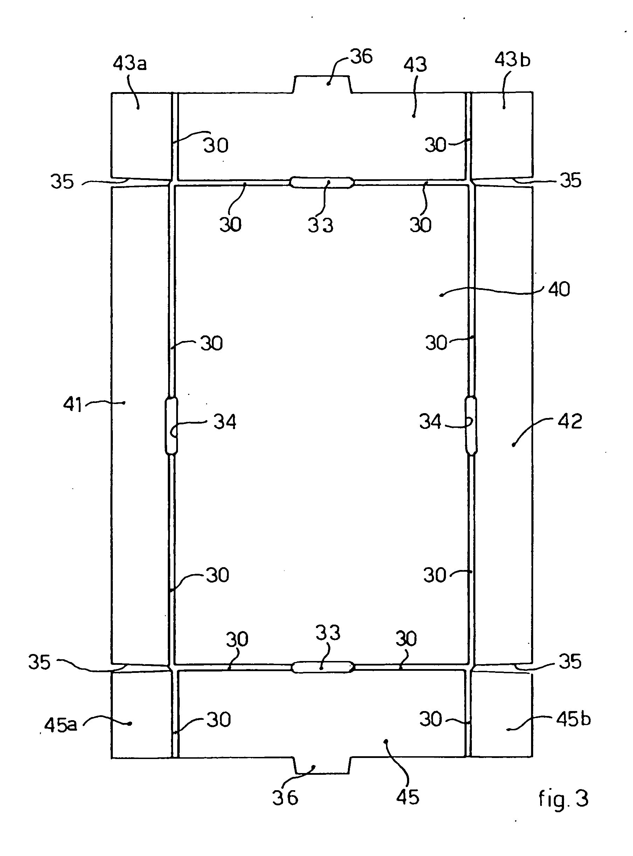

To be more exact, both the median zones 16 and the peripheral zones 17, and also the lateral parts 18 (all shown with a line of dashes in Fig. 2), are removed from the panel 11, so that the panel 11 is composed only of the parts used to make the crate 10 (Fig. 3). With the second shearing operation two eyelets 33 and two eyelets 34 are thus made, in place of the four median zones 16, four slits 35 in place of four peripheral zones 17, and two median fins 36 aligned with the eyelets 33.

The parts to make up the crate 10 comprise a bottom wall 40, two long lateral walls 41 and 42, two short lateral walls 43 and 45, two first fins 43a and 43b of the lateral wall 43 and two second fins 45a and 45b of the lateral wall 45.

Since it is a fruit box, the width of the long lateral walls 41 and 42, which will also be their height, is less than that of the shorter lateral walls 43 and 45. For example, they are respectively 60 mm and 90 mm, excluding the median fins 36.

The crate 10 can be completed by the user himself, and the following operations are required.

The lateral walls 41 and 42 are inclined by 90° upwards, hinged in the corresponding layers 30, so as to be arranged one parallel to the other and perpendicular to the bottom wall 40.

The fins 43a and 43b of the lateral wall 43 and the fins 45a and 45b of the lateral wall 45 are also then inclined by 90° upwards, so as to be arranged one parallel to the other and perpendicular to the lateral walls 43 and 45. Then the latter are inclined by 90° with respect to the bottom wall, thus arranging the fins 43a, 43b, 45a and 45b parallel to the lateral walls 41 and 42.

Finally the fins 43a, 43b, 45a and 45b are attached to the lateral walls 41 and 42 by any conventional means, such as glue or attachment elements 50.

When the crates 10 are piled up one on top of another, the median fins 36 enter into the corresponding eyelets 33 and thus prevent the upper crate 10 from moving laterally with respect to the lower one.

According to a variant not shown in the drawings, instead of being attached by means of the fins 43a, 43b, 45a and 45b, the lateral fins 41 and 42 are attached to the lateral fins 43 and 45 directly in correspondence with their edges, by means of any conventional means.

With the method according to the invention, which as we have seen comprises only three working steps to transform the basic panel 11 into a plurality of parts 40, 41, 42, 43, 45 hinged one to the other by the layers 30 of plastic material, it is possible to make containers of any shape and size, and the relative covers.

## Claims

1. Method to make containers (10) such as boxes, fruit crates, containers for furniture or for personal use or otherwise, each one having a bottom wall (40) and a plurality of lateral walls (41, 42, 43, 45), **characterized in that** it comprises at least a first shearing step to make in a substantially plane panel (11), having a surface extension at least equal to the sum of the surface of said bottom wall (40) and the surfaces of said lateral walls (41, 42, 43, 45), a plurality of notches (15) to delimit said bottom wall (40) from said lateral walls (41, 42, 43, 45), and a second injection step to inject plastic material both into said plurality of notches (15) and into the zones of said panel adjacent to said notches (15), in order to achieve connection layers (30) made of plastic material, functioning as a hinge between said bottom wall (40) and said lateral walls (41, 42, 43, 45), wherein said injection step is performed maintaining said panel (11) pressed with a force sufficient so that the latter is not deformed during the injection of said plastic material into the zones of said panel adjacent to said notches (15).

2. Method as in claim 1, **characterized in that** said notches (15) comprise one or more discontinuities in predetermined zones (16, 17) of said panel (11), to maintain the different parts which will make up the container (10) joined together by zones of temporary join during said second injection step.

3. Method as in claim 1 or 2, **characterized in that** said panel (11) is made of wood fibre or other composite material.

4. Method as in any claim hereinbefore, **characterized in that** the plastic material is injected at high pressure and at high temperature.

5. Method as in claim 4, **characterized in that** the injection pressure of said plastic material is between about 200 and about 800 bar.

6. Method as in claim 4, **characterized in that** said plastic material is injected at a temperature of between about 140°C and about 260°C.

7. Method as in any claim hereinbefore, **characterized in that** said notches (15) are through and are substantially constant in width.

8. Method as in any claim hereinbefore, **characterized in that** the width of said notches (15) is greater than the thickness of said panel (11).

9. Method as in claim 7 or 8, **characterized in that** the thickness of said panel (11) is between about 2 and about 10 mm and the width of said notches (15) is between about 5 and about 15 mm.

10. Method as in any claim hereinbefore, **characterized in that** said injection step is made by means of injection means (20) comprising at least a base (21) on which said panel (11) is rested, and thrust means (22) able to thrust said panel (11) with said force against said base (21).

11. Method as in claim 10, **characterized in that** said force is about 1.500.000 N.

12. Method as in claim 10, **characterized in that** said injection means (20) also comprise at least a punch (23) with a pointed and V-shaped lower end, which is provided with at least an injection channel (25), through which said plastic material is able to be injected.

13. Method as in claim 12, **characterized in that** the angle at the top (α) of the point of said punch (23) is equal to or slightly more than 90°.

14. Method as in claim 12, **characterized in that**, for the injection of said plastic material, said injection channel (25) is positioned in the meeting points (15d) between at least two of said notches (15).

15. Method as in any claim hereinbefore, **characterized in that** each of said connection layers (30) made of plastic material comprises a V-shaped groove (31) which defines two lateral parts (30a and 30b) permanently connected to said panel (11) and a join zone (30c) which constitutes a hinge between adjacent parts of said panel (11).

16. Method as in claim 15, **characterized in that** the thickness of said join zone (30c) is about 1 mm.

17. Method as in claim 13 or 15, **characterized in that** the angle of said groove (31) is substantially equal to the angle at the top (α) of said punch (23).

18. Method as in claim 2, **characterized in that** said discontinuities (16, 17) are eliminated after said second injection step has been completed so that said panel (11) is composed of only the parts useful to make said container (10).

19. Method as in claim 18, **characterized in that** said discontinuities (16, 17) are eliminated by means of shearing which makes a plurality of through apertures (33, 34, 35) in their place.

20. Container such as a box, a fruit crate, a drawer for furniture or otherwise, comprising a bottom wall (40) and a plurality of lateral walls (41, 42, 43, 45), **characterized in that** a connection layer (30) made of plastic material, functioning as a hinge, is disposed both between at least one of said lateral walls (41, 42, 43, 45) and said bottom wall (40), and also partially inside said walls (40, 41, 42, 43, 45).

21. Container as in claim 21, **characterized in that** said connection layer (30) is disposed between each one of said lateral walls (41, 42, 43, 45) and said bottom wall (40).

22. Container as in claim 21 or 22, **characterized in that** said connection layers (30) made of plastic material are made according to the method as in any one of the claims from 1 to 19 inclusive.

23. Container as in claim 20, 21 or 22, **characterized in that** said lateral walls comprise two first lateral walls (41, 42) parallel to each other and two second lateral walls (43, 45) perpendicular to said first lateral walls (41, 42), said second lateral walls (43, 45) being provided with fins (43a, 43b and 45a, 45b) disposed parallel and attached to said first lateral walls (41, 42).

24. Container as in claim 23, **characterized in that** connection layers (30) made of plastic material are also provided between said second lateral walls (43, 45) and said fins (43a, 43b and 45a, 45b).

## Patentansprüche

1. Verfahren zum Herstellen von Behältern (10) wie Kisten, Behältern für Obst, Behältern für Möbel oder des persönlichen Bedarfs oder anderes, wobei jeder Behälter eine Bodenwand (40) und mehrere Seitenwände (41, 42, 43, 45) aufweist, **dadurch gekennzeichnet, daß** es mindestens einen ersten Schneideschritt zur Verwirklichung von mehreren Einschnitten (15) in einer wesentlich ebenen Platte (11), deren Oberflächengröße mindestens gleich der Summe der Oberfläche dieser Bodenwand (40) und der Oberflächen dieser Seitenwände (41, 42, 43, 45) ist, zur Begrenzung dieser Bodenwand (40) gegenüber dieser Seitenwände (41, 42, 43, 45) und einen zweiten Einspritzschritt zum Einspritzen von Kunststoff sowohl in diese mehreren Einschnitte (15) als auch in die an diese Einschnitte (15) angrenzenden Abschnitte dieser Platte zwecks der Verwirklichung von Verbindungsschichten (30) aus Kunststoff als Scharniere zwischen dieser Bodenwand (40) und diesen Seitenwänden (41, 42, 43, 45) umfaßt, wobei dieser Einspritzschritt durch das Ausüben eines Druckes auf diese Platte (11) verwirklicht wird, und zwar mit einer ausreichenden Kraft, um die Verformung derselben während des Einspritzens dieses Kunststoffes in die an diese Einschnitte (15) angrenzenden Abschnitte dieser Platte zu vermeiden.

2. Verfahren nach Anspruch 1, **dadurch gekennzeichnet, daß** diese Einschnitte (15) eine oder mehrere Unterbrechungen in vorbestimmten Abschnitten (16, 17) dieser Platte (11) aufweisen, um die verschiedenen, den Behälter (10) bildenden Teile durch vorläufige Verbindungsabschnitte während dieses zweiten Einspritzschrittes miteinander verbunden zu halten.

3. Verfahren nach Anspruch 1 oder 2, **dadurch gekennzeichnet, daß** diese Platte (11) aus Holzfasern oder einem anderen Verbundmaterial besteht.

4. Verfahren nach dem einen oder dem anderen der vorhergehenden Ansprüche, **dadurch gekennzeichnet, daß** der Kunststoff unter Hochdruck und hoher Temperatur eingespritzt wird.

5. Verfahren nach Anspruch 4, **dadurch gekennzeichnet, daß** der Einspritzdruck dieses Kunststoffes sich zwischen etwa 200 und etwa 800 Bar bewegt.

6. Verfahren nach Anspruch 4, **dadurch gekennzeichnet, daß** dieser Kunststoff unter einer Temperatur zwischen etwa 140° C und etwa 260° C eingespritzt wird.

7. Verfahren nach dem einen oder dem anderen der vorhergehenden Ansprüche, **dadurch gekennzeichnet, daß** diese Einschnitte (15) durchgehend sind und eine wesentlich gleichbleibende Breite aufweisen.

8. Verfahren nach dem einen oder dem anderen der vorhergehenden Ansprüche, **dadurch gekennzeichnet, daß** die Breite dieser Einschnitte (15) größer als die Dicke dieser Platte (11) ist.

9. Verfahren nach Anspruch 7 oder 8, **dadurch gekennzeichnet, daß** die Dicke dieser Platte (11) sich zwischen etwa 2 und etwa 10 mm und die Breite dieser Einschnitte (15) sich zwischen etwa 5 und etwa 15 mm bewegt.

10. Verfahren nach dem einen oder dem anderen der vorhergehenden Ansprüche, **dadurch gekennzeichnet, daß** dieser Einspritzschritt durch Einspritzmittel (20) verwirklicht wird, die mindestens eine Unterlage (21) zum Aufliegen dieser Platte (11) und Druckmittel (22) umfassen, die dazu geeignet sind, diese Platte mit dieser Kraft gegen diese Unterlage zu drücken.

11. Verfahren nach Anspruch 10, **dadurch gekennzeichnet, daß** diese Kraft etwa 1.500.000 N beträgt.

12. Verfahren nach Anspruch 10, **dadurch gekennzeichnet, daß** diese Einspritzmittel (20) mindestens auch einen Stempel (23) mit einem unteren spitzen und V-förmigen Ende und mindestens einem Einspritzkanal (25) umfassen, durch den dieser Kunststoff eingespritz werden kann.

13. Verfahren nach Anspruch 12, **dadurch gekennzeichnet, daß** der Scheitelwinkel (α) der Spitze dieses Stempels (23) gleich oder etwas größer als 90° ist.

14. Verfahren nach Anspruch 12, **dadurch gekennzeichnet, daß** zum Einspritzen dieses Kunststoffes dieser Einspritzkanal (25) in den Kreuzungspunkten (15d) zwischen mindestens zweien dieser Einschnitte (15) angeordnet ist.

15. Verfahren nach dem einen oder dem anderen der vorhergehenden Ansprüche, **dadurch gekennzeichnet, daß** jede dieser Verbindungsschichte (30) aus Kunststoff eine V-förmige Nut (31) umfaßt, welche zwei mit dieser Platte (11) dauernd verbundene Seitenwände (30a und 30b) und einen Verbindungsabschnitt (30c) bestimmt, welcher ein Scharnier zwischen angrenzenden Teilen dieser Platte (11) bildet.

16. Verfahren nach Anspruch 15, **dadurch gekennzeichnet, daß** die Dicke dieses Verbindungsabschnittes (30c) etwa 1 mm beträgt.

17. Verfahren nach Anspruch 13 oder 15, **dadurch gekennzeichnet, daß** der Winkel dieser Nut (31) wesentlich gleich dem Scheitelwinkel (α) dieses Stempels (23) ist.

18. Verfahren nach Anspruch 2, **dadurch gekennzeichnet, daß** diese Unterbrechungen (16, 17) nach der Vervollständigung dieses zweiten Einspritzschrittes entfernt werden, so daß diese Platte (11) nur von Teilen gebildet ist, die zur Herstellung dieses Behälters (20) nützlich sind.

19. Verfahren nach Anspruch 18, **dadurch gekennzeichnet, daß** diese Unterbrechungen (16, 17) durch Schneiden entfernt werden, um anstatt dieser mehrere durchgehende Öffnungen (33, 34, 35) zu bilden.

20. Behälter wie eine Kiste, ein Behälter für Obst, ein Schubkasten für Möbel oder anderes, welcher eine Bodenwand (40) und mehrere Seitenwände (41, 42, 43, 45) aufweist, **dadurch gekennzeichnet, daß** eine Verbindungsschicht (30) aus Kunststoff sowohl zwischen mindestens einer dieser Seitenwände (41, 42, 43, 45) und dieser Bodenwand (40) als auch teilweise innerhalb dieser Seitenwände (41, 42, 43, 45) als Scharnier angeordnet ist.

21. Behälter nach Anspruch 21, **dadurch gekennzeichnet, daß** diese Verbindungsschicht (30) zwischen jeder dieser Seitenwände (41, 42, 43, 45) und dieser Bodenwand (40) angeordnet ist.

22. Behälter nach Anspruch 21 oder 22, **dadurch gekennzeichnet, daß** diese Verbindungsschichten (30) aus Kunststoff gemäß dem Verfahren nach dem einen oder dem anderen der Ansprüche 1 bis 19 verwirklicht sind.

23. Behälter nach Anspruch 20, 21 oder 22, **dadurch gekennzeichnet, daß** diese Seitenwände zwei erste zueinander parallele Seitenwände (41, 42) und zwei zweite, auf diese ersten Seitenwände (41, 42) senkrechte Seitenwände (43, 45) umfassen, wobei diese zweiten Seitenwände (43, 45) mit Schenkeln (43a, 43b und 45a, 45b) ausgestattet sind, die zueinander parallel angeordnet und an diesen ersten Seitenwänden (41, 42) befestigt sind.

24. Behälter nach Anspruch 23, **dadurch gekennzeichnet, daß** diese Verbindungsschichten (30) aus Kunststoff auch zwischen diesen zweiten Seitenwänden (43, 45) und diesen Schenkeln (43a, 43b und 45a, 45b) vorgesehen sind.

## Revendications

1. Méthode de fabrication de conteneurs (10) tels que des boîtes, cageots à fruits, caisses pour meubles, usage personnel ou autre, comportant chacun une paroi de fond (40) et une pluralité de parois latérales (41, 42, 43, 45), **caractérisée en ce qu'**elle comprend au moins une première étape de cisaillage destinée à fabriquer un panneau sensiblement plat (11), présentant une surface de développement au moins égale à la somme de la surface de ladite paroi de fond (40) et des surfaces desdites parois latérales (41, 42, 43, 44), une pluralité d'encoches (15) destinées à délimiter ladite paroi de fond (40) desdites parois latérales (41, 42, 43, 45), et une seconde étape d'injection visant à injecter de la matière plastique dans ladite pluralité d'encoches (15) ainsi que dans les zones dudit panneau adjacentes auxdites encoches (15), afin de réaliser des couches d'assemblage (30) à base de matière plastique, fonctionnant comme une articulation entre ladite paroi de fond (40) et lesdites parois latérales (41, 42, 43, 45), méthode dans laquelle ladite étape d'injection s'effectue en maintenant ledit panneau (11) en pression sous une force suffisante pour qu'il ne soit pas déformé au cours de l'injection de ladite matière plastique dans les zones dudit panneau adjacentes auxdites encoches (15).

2. Méthode selon la revendication 1, **caractérisée en ce que** lesdites encoches (15) comprennent une ou plusieurs discontinuités dans des zones prédéfinies (16, 17) dudit panneau (11), afin de maintenir les différentes parties qui constitueront le conteneur (10) jointives par des zones de joint temporaire au cours de ladite seconde étape d'injection.

3. Méthode selon la revendication 1 ou 2, **caractérisée en ce que** ledit panneau (11) est à base de fibre de bois ou d'autre matériau composite.

4. Méthode selon l'une quelconque des revendications ci-dessus, **caractérisée en ce que** la matière plastique est injectée sous haute pression et haute température.

5. Méthode selon la revendication 4, **caractérisée en ce que** la pression d'injection de ladite matière plastique est comprise entre 200 bars environ et 800 bars environ.

6. Méthode selon la revendication 4, **caractérisée en ce que** ladite matière plastique est injectée à une température comprise entre 140 °C environ et 260 °C environ.

7. Méthode selon l'une quelconque des revendications ci-dessus, **caractérisée en ce que** lesdites encoches (15) sont traversantes et de largeur sensiblement constante.

8. Méthode selon l'une quelconque des revendications ci-dessus, **caractérisée en ce que** la largeur desdites encoches (15) est supérieure à l'épaisseur dudit panneau (11).

9. Méthode selon la revendication 7 ou 8, **caractérisée en ce que** l'épaisseur dudit panneau (11) est comprise entre 2 mm environ et 10 mm environ, et la largeur desdites encoches (15) est comprise entre 5 mm environ et 15 mm environ.

10. Méthode selon l'une quelconque des revendications ci-dessus, **caractérisée en ce que** ladite étape d'injection est réalisée par des moyens d'injection (20) comprenant au moins une base (21) sur laquelle repose ledit panneau (11), et des moyens de poussée (22) aptes à pousser ledit panneau (11) avec ladite force contre ladite base (2).

11. Méthode selon la revendication 10, **caractérisée en ce que** ladite force est d'environ 1.500.000 N.

12. Méthode selon la revendication 10, **caractérisée en ce que** lesdits moyens d'injection (20) comprennent également au moins un poinçon (23) doté d'une extrémité inférieure pointue et en forme de V, lequel est pourvu d'au moins un canal d'injection (25) par lequel peut être injectée ladite matière plastique.

13. Méthode selon la revendication 12, **caractérisée en ce que** l'angle au sommet (α) de la pointe dudit poinçon (23) est égal ou légèrement supérieur à 90°.

14. Méthode selon la revendication 12, **caractérisée en ce que**, pour l'injection de ladite matière plastique, ledit canal d'injection (25) est positionné aux points de rencontre (15d) d'au moins deux desdites encoches (15).

15. Méthode selon l'une quelconque des revendications ci-dessus, **caractérisée en ce que** chacune des couches d'assemblage (30) à base de matière plastique comprend une rainure en V (31) qui définit deux parties latérales (30a et 30b) reliées en permanence audit panneau (11), et une zone de jointure (30c) qui constitue une articulation entre des parties adjacentes dudit panneau (11).

16. Méthode selon la revendication 15, **caractérisée en ce que** l'épaisseur de ladite zone de jointure (30c) est d'environ 1 mm.

17. Méthode selon la revendication 13 ou 15, **caractérisée en ce que** l'angle de ladite rainure (31) est sensiblement égal à l'angle au sommet (α) dudit pinçon (23).

18. Méthode selon la revendication 2, **caractérisée en ce que** lesdites discontinuités (16, 17) sont éliminées une fois ladite seconde étape d'injection effectuée, de sorte que ledit panneau (11) soit uniquement composé des parties utiles à la fabrication dudit conteneur (10).

19. Méthode selon la revendication 18, **caractérisée en ce que** lesdites discontinuités (16, 17) sont éliminées par cisaillage qui pratique à leur place une pluralité d'ouvertures traversantes (33, 34, 35).

20. Conteneur tel qu'une boîte, un cageot à fruits, un tiroir de meuble ou autre, comprenant une paroi de fond (40) et une pluralité de parois latérales (41, 42, 43, 45), **caractérisé en ce qu'**une couche d'assemblage (30) à base de matière plastique, fonctionnant comme une articulation, est placée entre l'une au moins desdites parois latérales (41, 42, 43, 44) et ladite paroi de fond (40), ainsi que partiellement à l'intérieur desdites parois (40, 41, 42, 43, 45).

21. Conteneur selon la revendication 21, **caractérisé en ce que** ladite couche d'assemblage (30) est placée entre chacune desdites parois latérales (41, 42, 43, 45) et ladite paroi de fond (40).

22. Conteneur selon la revendication 21 ou 22, **caractérisé en ce que** lesdites couches d'assemblage (30) à base de matière plastique sont fabriquées selon la méthode telle que présentée dans l'une quelconque des revendications 1 à 19 incluse.

23. Conteneur selon la revendication 20, 21 ou 22, **caractérisé en ce que** lesdites parois latérales comprennent deux premières parois latérales (41, 42) parallèles entre elles, et deux secondes parois latérales (43, 45) perpendiculaires auxdites premières parois latérales (41, 42), lesdites secondes parois latérales (43, 45) étant pourvues d'ailettes (43a, 43b et 45a, 45b) placées parallèlement et fixées auxdites premières parois latérales (41, 42).

24. Conteneur selon la revendication 23, **caractérisé en ce que** des couches d'assemblage (30) à base de matière plastique sont également prévues entre lesdites secondes parois latérales (43, 45) et lesdites ailettes (43a, 43b et 45a, 45b).
